# EUROPÄISCHE PATENTANMELDUNG

(11) **EP 3 576 031 A1**
(43) Veröffentlichungstag der Anmeldung: **04.12.2019**
(21) Anmeldenummer: 19173334.4
(22) Anmeldetag: 08.05.2019
(51) Int. Cl.: G06Q 10/08, G06F 21/64

(54) **VERFAHREN UND VORRICHTUNG ZUM PRÜFEN EINES SACHVERHALTES IN EINEM DEZENTRALEN TRANSAKTIONSSYSTEM**

(30) Priorität: 30.05.2018 DE 102018208591
(71) Anmelder: Robert Bosch GmbH, 70442 Stuttgart (DE)
(72) Erfinder: Berg, Florian, 71732 Tamm (DE); Ververis, Diamantis, 70376 Stuttgart (DE); De Waard, Danny, 74354 Besigheim (DE); Achar, Madhav, Troy, Michigan, 48083 (US); Schaefer, Michael, 72666 Neckartailfingen (DE)

(57) **Zusammenfassung**

Verfahren (10) zum Prüfen eines Sachverhaltes (11) in einem dezentralen Transaktionssystem (20),
gekennzeichnet durch folgende Merkmale:
- der Sachverhalt (11) wird durch ein erstes Gerät (21) in dem Transaktionssystem (20) erkannt,
- der Sachverhalt (11) wird durch das erste Gerät (21) mittels des Transaktionssystems (20) protokolliert (12),
- weitere Geräte (22, 23, 24) in dem Transaktionssystem (20) werden vom ersten Gerät (21) aufgefordert (13), bestimmte Daten zu erfassen (14),
- die Daten werden durch die weiteren Geräte (22, 23) erfasst (14),
- die erfassten Daten werden durch die weiteren Geräte (22, 23) mittels des Transaktionssystems (20) protokolliert (15) und
- der Sachverhalt (11) wird in dem Transaktionssystem (20) anhand der protokollierten Daten bestätigt oder widerlegt.

## Beschreibung

Die vorliegende Erfindung betrifft ein Verfahren zum Prüfen eines Sachverhaltes in einem dezentralen Transaktionssystem. Die vorliegende Erfindung betrifft darüber hinaus eine entsprechende Vorrichtung, ein entsprechendes Computerprogramm sowie ein entsprechendes Speichermedium.

### Stand der Technik

Als dezentrales Transaktionssystem, Transaktionsdatenbank oder dezentral geführtes Kontobuch (*distributed ledger*) wird in der Informatik jedwedes Rechnernetz verstanden, das mittels eines gemeinsamen Konsensusprotokolls eine Übereinkunft über Reihenfolge und Inhalt bestimmter Transaktionen trifft. Im Folgenden wird der Begriff in einem weiten Sinne verwendet, der private und öffentliche Systeme gleichermaßen erfasst.

EP3295349A1 offenbart ein computerimplementiertes Verfahren und System zur Überprüfung der Integrität einer Computersoftware zur Installation unter Verwendung einer verteilten Hash-Tabelle und eines in einem Rechner-Rechner-Netzwerk (*peer-to-peer network,* P2P) verteilten Hauptbuchs. Das Verfahren umfasst das Bestimmen von Metadaten, die mit einem Transaktionsdatensatz verknüpft sind, der in dem verteilten Hauptbuch gespeichert ist. Ein Hinweis auf einen Eintrag, der in der verteilten Hash-Tabelle gespeichert ist, kann aus den Metadaten bestimmt werden. Das Verfahren umfasst ferner das Bestimmen eines dritten Hash-Werts basierend auf der Computersoftware und das Bestimmen eines vierten Hash-Werts aus dem Eintrag in der verteilten Hash-Tabelle. Das Verfahren umfasst ferner das Vergleichen des dritten Hash-Werts und des vierten Hash-Werts und das Verifizieren der Integrität der Computersoftware basierend auf dem Vergleichen des dritten Hash-Werts und des vierten Hash-Werts.

### Offenbarung der Erfindung

Die Erfindung stellt ein Verfahren zum Prüfen eines Sachverhaltes in einem dezentralen Transaktionssystem, eine entsprechende Vorrichtung, ein entsprechendes Computerprogramm sowie ein entsprechendes Speichermedium gemäß den unabhängigen Ansprüchen bereit.

Der vorgeschlagene Ansatz fußt auf der Erkenntnis, dass ein Eintrag in einem dezentralen Transaktionssystem durch ein fehlerhaftes Gerät oder durch andere äußere Einflüsse kompromittiert sein kann. Dies kann dazu führen, dass Daten, Informationen und deren Wahrheitswert in einem dezentralen Transaktionssystem von Dritten nicht anerkannt werden. Insbesondere in Szenarien, in welchen die gespeicherten Daten als Beweis für die Verantwortung eines Dritten für einen bestimmten Zustand dienen sollen, kann die Korrektheit der Daten von dem genannten Dritten angefochten werden.

Um diesen Mangel zu beheben, besteht ein Grundgedanke des nachfolgend beschriebenen Verfahrens darin, durch das "Beauftragen" weiterer Geräte gewisse Umweltgrößen (beispielsweise Temperatur, Luftfeuchtigkeit, Helligkeit oder Erschütterung) oder auch andere Zustände zu dokumentieren (etwa in Bild- oder Videoaufnahmen) und diese Dokumentation für das im obigen Sinne "beauftragende" Gerät in ein dezentrales Transaktionssystem zu speichern.

Das solchermaßen beauftragte Gerät speichert die Daten im Auftrag des ersten Geräts und erfüllt somit gleichsam die Funktion eines Zeugen für einen bestimmten Zustand zu einem bestimmten Zeitpunkt. Die betreffenden Daten können hierzu sowohl direkt in das dezentrale Transaktionssystem als auch an einem zentralen Speicherort abgelegt werden.

Bei der Speicherung an einem zentralen Speicherort bildet das "beweisende" Gerät die Prüfsumme des Datensatzes und legt diesen unter Angabe des Speicherortes des Datensatzes in das dezentrale Transaktionssystem ab.

Ähnlich dem Vorgehen, nach dem in einem dezentralen Transaktionssystem Transaktionen von mehreren unabhängigen Parteien bestätigt werden und somit ein Konsens über den Stand der Informationen hergestellt wird, wird bei der vorliegenden Lösung somit gewissermaßen ein Konsens auf der Ebene der Datenquellen erzeugt.

Ein Vorzug dieser Lösung liegt in der chronologischen, manipulationssicheren und somit beweisfähigen Dokumentation bestimmter Zustände, Umweltgrößen und deren Abweichungen ohne die Notwendigkeit eines manuellen Eingriffs. Die beauftragten Geräte können ihren Dienst mittels digitaler Verträge im Transaktionssystem selbst gegenüber dem beauftragenden Gerät abrechnen, welches die erhobene Gebühr in eben diesem System direkt begleicht.

Durch die in den abhängigen Ansprüchen aufgeführten Maßnahmen sind vorteilhafte Weiterbildungen und Verbesserungen des im unabhängigen Anspruch angegebenen Grundgedankens möglich.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 das Flussdiagramm eines Verfahrens gemäß einer ersten Ausführungsform.
Figur 2 eine erste Phase des Verfahrens.
Figur 3 eine zweite Phase des Verfahrens.
Figur 4 ein der Logistik entliehenes Anwendungsbeispiel.

### Ausführungsformen der Erfindung

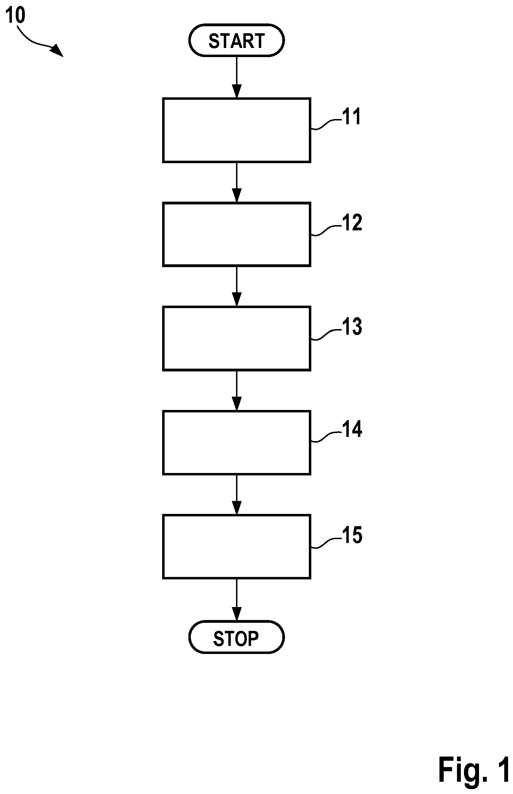

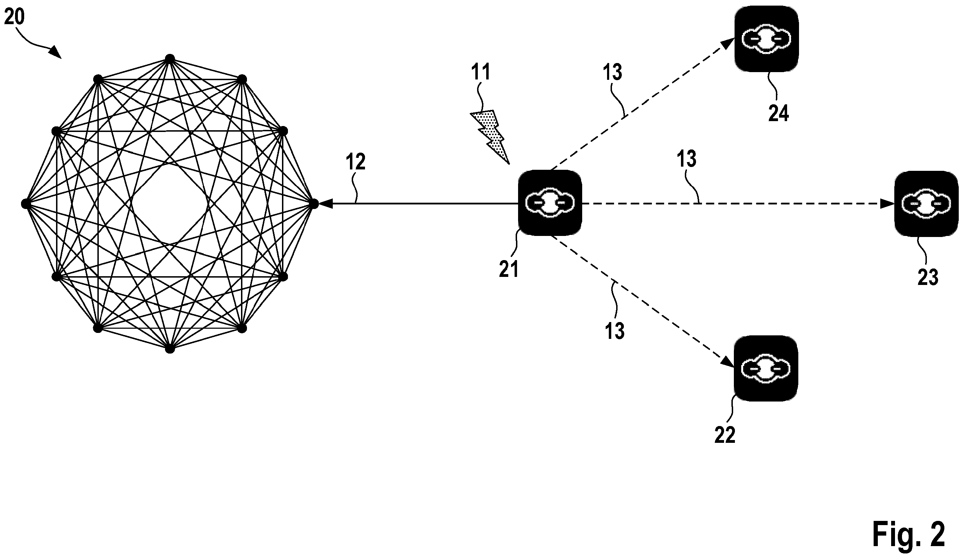

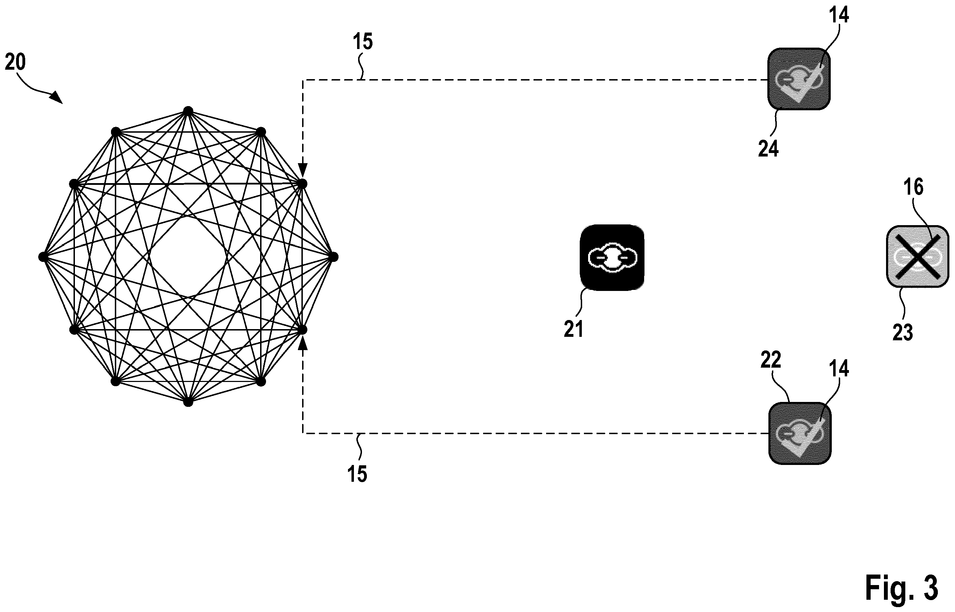

Figur 1 illustriert den grundlegenden Ablauf eines erfindungsgemäßen Verfahrens (10), dessen Ablauf nunmehr beispielhaft anhand der Blockdiagramme gemäß Figur 2 und Figur 3 erläutert sei.

In einem vorbereitenden, zeichnerisch nicht dargestellten Schritt melden sich die beteiligten Geräte (21, 22, 23, 24) gegenseitig an und setzen einander davon in Kenntnis, über welche Fähigkeiten sie verfügen. Auf diese Weise bilden die Geräte (21, 22, 23, 24) ein P2P-Rechnernetz, in welchem Daten direkt zwischen zwei Knoten ausgetauscht werden können. Darunter sind insbesondere Geräte (21), deren Aufgabe unter anderem darin besteht, bestimmte Situationen zu beobachten. Abweichungen (11) von vordefinierten Soll-Zuständen oder andere als unerwartet definierte Zustände können hierbei eine Protokollierung (12) erfordern.

Erkennt nun ein derartiges Gerät (21) einen solchen Zustand, so wird dieser protokolliert (12). Hierzu werden die betreffenden Daten in einem dezentralen Transaktionssystem (20) abgelegt. Die Daten können, wie oben beschrieben, direkt als Teil der Transaktion oder an einem zentralen Speicherort abgelegt werden. Werden die Daten als Teil der Transaktion im zentralen Transaktionssystem (20) abgelegt, so werden zumindest eine Kennung des Gerätes und die Daten der Abweichung (11) selbst vermerkt. Werden die Daten an einem zentralen Speicherort gespeichert, so wird anstelle der Daten der Abweichung selbst (11) die Adresse des gespeicherten Datensatzes der Abweichung (11) sowie dessen Prüfsumme oder Streuwert (*hash*) gesichert.

Zur Verifikation der Daten fordert das erste Gerät (21) nunmehr andere Geräte (22, 23, 24) dazu auf (13), den ermittelten Zustand zu bestätigen. Dies geschieht mittels eines Aufrufs an alle übrigen in dem oben beschriebenen Verbund (21, 22, 23, 24) angemeldeten Geräte (22, 23, 24). Dabei wird den weiteren Geräten (22, 23, 24) neben der Kennung des aufrufenden Gerätes (21) mitgeteilt, was ermittelt oder erfasst werden soll - etwa eine Messung der Temperatur oder eine Bildaufnahme der Umgebung.

In einer bevorzugten Ausführungsform wird der von dem Aufrufer (21) ermittelte Zustand den weiteren Geräten (22, 23, 24) bewusst nicht mitgeteilt, um die Unabhängigkeit deren eigener Messungen nicht zu beeinflussen. Dies vermindert die Gefahr einer Manipulation der Ergebnisse. Es wird beispielsweise lediglich die Messgröße und nicht der erwartete Messwert bezeichnet.

Die auf diese Weise beauftragten Geräte (22, 23, 24) erfassen (14) und protokollieren (15) den gewünschten Zustand ebenfalls entweder direkt im dezentralen Transaktionssystem (20) oder, wie oben beschrieben, an einem zentralen Speicherort und vermerken dabei die eigene Kennung, Daten der Abweichung (11) sowie die übermittelte Kennung des aufrufenden Gerätes (21). Werden die Daten der Abweichung (11) an einem zentralen Speicherort gespeichert, so wird an ihrer Stelle auch in diesem Fall die Adresse des gespeicherten Datensatzes der Abweichung (11) sowie dessen Prüfsumme oder Streuwert gesichert. Es versteht sich, dass eine Protokollierung (15) für diejenigen Geräte (23) entfällt, welche die angeforderte Größe nicht ermitteln können (16).

Anhand der solchermaßen protokollierten Daten kann die Abweichung (11) schließlich entweder bestätigt oder widerlegt werden. Würde im Szenario gemäß der Figuren 2 und 3 etwa das Gerät 21 einen Betrag von 120, das Gerät 22 einen Betrag von 121 und das Gerät 23 einen Betrag von 119 für eine gegebene Messgröße X bestimmen, so wäre mit großer Wahrscheinlichkeit von einem Betrag von |*X*| = 120 auszugehen, wobei ein allgemeiner Konsens über die Verifikation der Abweichung (11) bestünde. Würde hingegen das Gerät 22 einen Betrag von 86 und das Gerät 23 einen Betrag von 84 protokollieren, so läge der Schluss nahe, dass das Gerät 21 defekt oder falsch justiert wäre und ein Betrag von |*X*| = 85 vorläge.

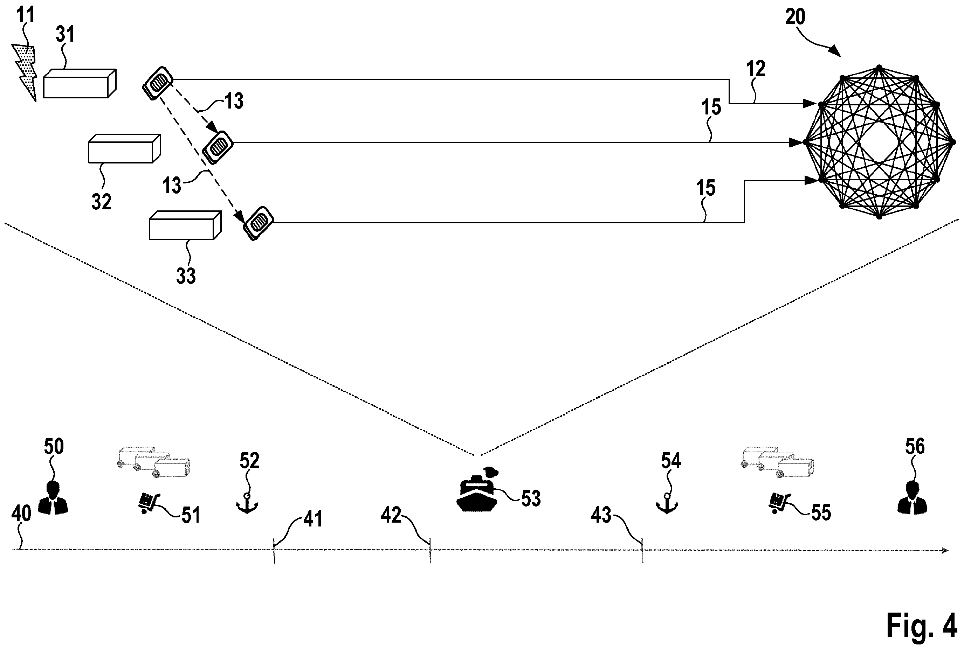

Figur 4 verdeutlich diese Herangehensweise anhand eines Beispiels aus der Logistikbranche.

Beim Transport eines Containers 31 von einem Standort 50 zu einem Standort 56 sind mehrere Logistik-Service-Anbieter (51, 53, 55) involviert. Dies sind beispielweise die Spedition 51, die die Fracht von Standort 50 abholt und - zeichnerisch dargestellt anhand der Zeitleiste 40 - an einen Hafen 52 liefert, wo sie verladen (41) wird, das Seefrachtunternehmen 53, welches die Fracht zum Hafen 54 transportiert, sowie die Spedition 55, welche die Fracht nach dem Löschen (43) vom Hafen 54 zum Standort 56 transportiert.

Die beschriebene Fracht muss unter bestimmten Umweltgrößen wie beispielsweise einer maximalen Temperatur von 50 °C transportiert werden. Zur Sicherstellung der Transportkonditionen werden Transportdatenlogger an den Containern (31, 32, 33) oder Paletten angebracht, welche die Temperatur kontinuierlich messen und protokollieren.

Wird zum Zeitpunkt 42, beispielsweise am 01.01.2018 um 09:12:20 Uhr, eine Temperatur von beispielsweise 50,2 °C gemessen, so protokolliert (12) der Transportdatenlogger des Containers 31 diese Abweichung (11) in einer Blockkette *(blockchain)* oder einem anderen dezentralen Transaktionssystem (20) und beauftragt (13) zeitgleich die Transportdatenlogger der Container 32 und 33 damit, ebenfalls die gerade gemessene Temperatur zu messen (14) und in der Blockchain zu protokollieren (15).

Die Daten, die dabei in der Blockchain gespeichert werden sind, umfassen neben der Temperatur von beispielsweise 50,3 bzw. 50,5 °C auch die Kennung des beauftragenden Transportdatenloggers, wobei der Zeitstempel der Messung (14) und Protokollierung (15) - etwa am 01.01.2018 um 09:12:22 bzw. 09:12:23 Uhr - von der Blockchain erfasst wird. Diese beispielhaften Daten deuten mit großer Wahrscheinlichkeit auf eine Temperatur von 50,3 °C hin.

Am Standort 56 wird nach der Anlieferung ein Defekt an der Fracht festgestellt, welcher auf die Abweichung (11) der Temperatur zurückzuführen ist. Anhand der Protokollierung (12) der Temperatur durch den Transportdatenlogger kann die Abweichung anhand des Zeitstempels in der Blockchain der Partei 53 in der beschriebenen Transportkette (51, 53, 55) zugeordnet werden.

Durch die Verifikation dieser Daten durch einen zweiten unabhängigen Transportdatenlogger kann deren Richtigkeit sichergestellt werden.

Die Partei 53, welcher die Verantwortung für die Abweichung (11) zugeordnet wird, kann diese nicht aufgrund eines möglichen Defekts oder Fehlers des Transportdatenloggers anzweifeln.

In einer bevorzugten Ausführungsform kann das erste Gerät (21) die weiteren Geräte (22, 23, 24) durch eine Transaktion von digitaler Wertrepräsentation wie z. B. Tokens oder Shares für ihren Aufwand entschädigen. Diese Werterepräsentation ist Teil von digitalen Währungen, wie es z. B. Bitcoin ist.

## Patentansprüche

1. Verfahren (10) zum Prüfen eines Sachverhaltes (11) in einem dezentralen Transaktionssystem (20),
**gekennzeichnet durch** folgende Merkmale:
- der Sachverhalt (11) wird durch ein erstes Gerät (21) in dem Transaktionssystem (20) erkannt,
- der Sachverhalt (11) wird durch das erste Gerät (21) mittels des Transaktionssystems (20) protokolliert (12),
- weitere Geräte (22, 23, 24) in dem Transaktionssystem (20) werden vom ersten Gerät (21) aufgefordert (13), bestimmte Daten zu erfassen (14),
- die Daten werden durch die weiteren Geräte (22, 23) erfasst (14),
- die erfassten Daten werden durch die weiteren Geräte (22, 23) mittels des Transaktionssystems (20) protokolliert (15) und
- der Sachverhalt (11) wird in dem Transaktionssystem (20) anhand der protokollierten Daten bestätigt oder widerlegt.

2. Verfahren (10) nach Anspruch 1,
**gekennzeichnet durch** folgendes Merkmal:
- der Sachverhalt (11) ist durch ein vorgegebenes Ereignis (11) definiert.

3. Verfahren (10) nach Anspruch 2,
**gekennzeichnet durch** folgendes Merkmal:
- das Ereignis (11) ist eine Abweichung (11) von einem vorgegebenen Zustand.

4. Verfahren (10) nach einem der Ansprüche 1 bis 3,
**gekennzeichnet durch** eines der folgenden Merkmale:
- das Protokollieren (12, 15) erfolgt durch ein Ablegen eines Datensatzes im Transaktionssystem (20) oder
- das Protokollieren (12, 15) erfolgt durch ein Ablegen eines Datensatzes in einem zentralen Speicher und einer Prüfsumme des Datensatzes im Transaktionssystem (20).

5. Verfahren (10) nach einem der Ansprüche 1 bis 4,
**gekennzeichnet durch** folgende Merkmale:
- den weiteren Geräten (22, 23, 24) wird eine Kennung des ersten Gerätes (21) übermittelt und
- die Kennung wird durch die weiteren Geräte (22, 23) gemeinsam mit den Daten protokolliert (15).

6. Verfahren (10) nach einem der Ansprüche 1 bis 5,
**gekennzeichnet durch** mindestens eines der folgenden Merkmale:
- die zu erfassenden Daten umfassen Bilddaten oder
- die zu erfassenden Daten umfassen physikalische Messdaten.

7. Verfahren (10) nach einem der Ansprüche 1 bis 6,
**gekennzeichnet durch** folgendes Merkmal:
- das Protokollieren (12, 15) umfasst das Ablegen eines Zeitstempels.

8. Computerprogramm, welches eingerichtet ist, das Verfahren (10) nach einem der Ansprüche 1 bis 7 auszuführen.

9. Maschinenlesbares Speichermedium, auf dem das Computerprogramm nach Anspruch 8 gespeichert ist.

10. Vorrichtung (20, 21, 22, 23, 24), die eingerichtet ist, das Verfahren (10) nach einem der Ansprüche 1 bis 7 auszuführen.
